# EUROPÄISCHE PATENTSCHRIFT

(11) **EP 0 957 317 B1**
(45) Veröffentlichungstag und Bekanntmachung des Hinweises auf die Patenterteilung: **10.12.2003**
(21) Anmeldenummer: 99106752.1
(22) Anmeldetag: 03.04.1999
(51) Int. Cl.: F24D 3/14

(54) **Aufzugsträger zum Verlegen von Heizungsrohren in Betondecken**
Retaining device for mounting heating pipes in concrete ceilings
Dispositif de fixation pour monter des tubes de chauffage dans des plafonds de béton

(30) Priorität: 15.05.1998 DE 29808792 U
(43) Veröffentlichungstag der Anmeldung: 17.11.1999
(73) Patentinhaber: Wirsbo-VELTA GmbH & Co. KG, 22851 Norderstedt (DE)
(72) Erfinder: Lipinski, Johann, 20257 Hamburg (DE)
(74) Vertreter: Hilleringmann, Jochen, Dipl.-Ing.

(56) Entgegenhaltungen:
- EP-A- 0 046 519
- DE-A- 3 044 330

## Beschreibung

Die Erfindung betrifft einen Aufzugsträger nach dem Oberbegriff des Anspruches 1.

Ein derartiger Aufzugsträger ist aus der EP-A1-46519 bekannt, bei dem die Rohrhalterungen jeweils durch im wesentlichen Ω- förmige Verformung eines Gitterstabes ausgebildet sind.

Aus der DE-A1-30 43 001 ist ein Gitter bekannt, bei dem besondere Haltestäbe vorgesehen sind, um die das Heizungsrohr abwechselnd herumgelegt und durch seine Eigenspannung gehalten wird.
Der Erfindung liegt nun die Aufgabe zugrunde, einen Aufzugsträger der eingangs genannten Art zu schaffen, in den die Rohrhalter integriert sind und die ein leichtes Befestigen der Heizungsrohre, ggf. ein nachträgliches Herausnehmen sowie mehrmalige Wiederholung dieses Vorganges ermöglichen, ohne daß die Heizungsrohre verformt oder beschädigt werden.

Diese Aufgabe wird durch den Gegenstand des Anspruches 1 gelöst.

Erfindungsgemäß ist der Rohrhalter Teil des Aufzugsträgers, d.h. des durch die senkrecht zueinander verlaufenden Drähte gebildeten Gitters. Es sind also keine besonderen Rohrhalter vorhanden. Diese Rohrhalter werden durch eine nicht unterbrochene Verformung der Drähte in bestimmten Abschnitten gebildet, so daß sie die Heizungsrohre in diesen verformten Abschnitten federnd aufnehmen. Die Verformung erfolgt unter Berücksichtigung der federnden Eigenschaft der Drähte so, daß die Rohre ohne Beschädigung in die entsprechend gebildeten federnden Rohrhalter eingeschnappt, aber auch wieder herausgedrückt werden können. Die Rohrhalter sind Teil der ohne Unterbrechung durchlaufenden Drähte des Gitters. Erfindungsgemäß weist das Gitter Paare von jeweils zwei dicht nebeneinander verlaufenden Drähten auf die so verformt sind, daß nach oben und aufeinander vorstehende Bögen entstehen, die das Heizungsrohr seitlich und oben halten. Nach unten wird das Heizungsrohr durch die anderen senkrecht zu diesen verformten Drähten verlaufenden Drähte gehalten.

In vorteilhafter Weise ist der Aufzugsträger so ausgebildet, wie in Anspruch 2 definiert.

Im folgenden wird die Erfindung unter Hinweis auf die Zeichnung anhand eines Ausführungsbeispieles näher erläutert.

Es zeigt:
- Fig. 1: eine schematische Draufsicht auf eine Ausführungsform eines Aufzugsträgers nach der Erfindung;
- Fig. 2: eine der Fig. 1 entsprechende Draufsicht im Ausschnitt und in vergrößertem Maßstab;
- Fig. 3: eine Einzelheit E der Fig. 2 in perspektivischer Darstellung in nochmals vergrößertem Maßstab; und
- Fig. 4: eine Draufsicht auf die Darstellung der Fig. 3.

Der in der Zeichnung dargestellte Aufzugsträger 1 entspricht grundsätzlich demjenigen, wie er in der EP-A1-385 148 beschrieben und dort als "Aufzugsträgerelement" bezeichnet ist.

Dieser Aufzugsträger wird durch senkrecht zueinander verlaufende Drähte 2,3 gebildet, die auf diese Weise ein Gitter mit entsprechenden Maschen bilden.

In besonderer Weise verlaufen bei der Erfindung so, wie sie in der Zeichnung dargestellt ist, zwei Drähte 2 in einer Richtung und dicht nebeneinander. Die senkrecht hierzu verlaufenden Drähte 3 sind Einzeldrähte.

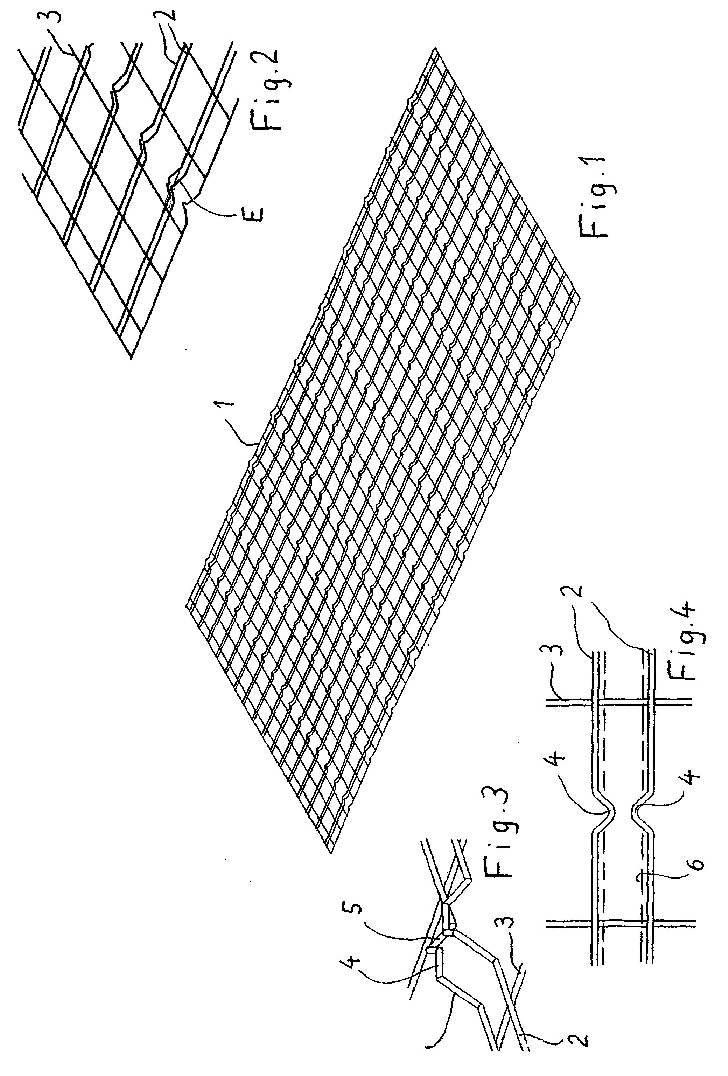

Wie insbesondere beim Betrachten der Fig. 3 und 4 deutlich wird, sind die dicht nebeneinander in einer Richtung verlaufenden Drähte 2 wiederum nebeneinander durch nach oben und aufeinander zu gerichtete Bögen verformt. Diese Bögen weisen zwei nach oben gerichtete Abschnitte 5 und einen auf den anderen Draht zu gerichteten, oben liegenden Abschnitt 4 auf. Hierdurch entsteht unter Berücksichtigung der Federeigenschaft der Drähte 2 ein Rohrhalter, in den ein Heizungsrohr eingedrückt werden kann. In Fig. 4 ist ein Heizungsrohr 6 gestrichelt dargestellt. Die Eigenschaften des durch die Bögen 4,5 gebildeten Rohrhalters sind so, daß das Heizungsrohr ohne Verformung und Beschädigung eingedrückt werden kann. Es liegt dann zwischen zwei nebeneinanderverlaufenden Drähten 2 und wird nach oben und zur Seite durch die Bögen 4,5 gehalten. Nach unten wird das Heizungsrohr 6 durch die querverlaufenden Drähte 3 gehalten, da der Abstand zwischen den nebeneinanderverlaufenden Drähten 2 etwas größer ist als der Durchmesser des Heizungsrohres.

Beim Betrachten der Fig. 1 und 2 wird deutlich, wie mehrere Rohrhalter 4,5 nebeneinanderliegend in einem Aufzugsträger ausgebildet sein können, um entsprechende Heizungsrohre, beispielsweise in Mäanderform, aufzunehmen.

## Patentansprüche

1. Aufzugsträger zum Verlegen von Heizungsrohren in Betondecken, mit
- durch senkrecht zueinander verlaufende, ein Gitter bildende Drähte (2) und
- Rohrhaltern (4,5) zur Befestigung der Heizungsrohre an den Drähten (2), wobei die Rohrhalter (4,5) durch die Gitterdrähte (2) als Teil von diesen derart ausgebildet sind, dass sie die Heizungsrohre durch Federung aufnehmen,
**dadurch gekennzeichnet,**
- **dass** die Rohrhalter (4,5) durch eine nicht unterbrochene Verformung von jeweils zwei in einem Abstand nebeneinander verlaufenden Drähten (2) des Gitters gebildet sind, deren Abstand geringfügig größer ist als der Durchmesser der zu verlegenden Heizungsrohre (6), und
- **dass** die Drähte (2) zur Bildung der federnden Rohrhalter (4,5) aus ihrer in der Gebrauchslage des Gitters definierten Ebene heraus nach oben und aufeinander zu verformt sind.

2. Aufzugsträger nach Anspruch 1, **dadurch gekennzeichnet, dass** die Rohrhalter (4,5) an dem durch die Drähte (2,3) gebildeten Gitter nebeneinanderliegend und durch jeweils in einer Richtung nebeneinanderverlaufende Drähte (2) gebildet sind.

## Claims

1. Retaining device for mounting heating pipes in concrete ceilings, comprising
wires (2) extending perpendicularly to each other and forming a grating, and
pipe holders (4, 5) for fastening the heating pipes to the wires (2), the pipe holders (4, 5) being formed by the wires (2) as parts thereof such that they receive the heating pipes by spring action,
**characterized in that**
the pipe holders (4, 5) are formed by a continuous deformation of two respective spaced wires (2) of the grating extending in parallel, whose distance from each other being slightly larger that the diameter of the heating pipes (6) to be mounted, and
for forming the resilient pipe holders (4, 5), the wires (2) are deformed upward and towards each other from the plane defined by the position of use of the grating.

2. Retaining device of claim 1, wherein, in the grating constituted by the wires (2, 3), the pipe holders (4, 5) are formed side by side and by wires (2) respectively extending side by side in one direction.

## Revendications

1. Dispositif de fixation pour monter des tubes de chauffage dans des plafonds de béton, le dispositif comprenant:
des fils métalliques (2) s'étendant perpendiculairement l'un à l'autre et formant une grille, et
des moyens à retenir des tuyaux (4, 5) pour fixer les tuyaux de chauffage aux fils (2), les moyens à retenir les tuyaux (4, 5) étant formés par les fils (2) de grille comme parties des fils, de manière qu'ils reçoivent les tuyaux de chauffage par élasticité,
**caractérisé en ce**
**que** les moyens à retenir des tuyaux (4, 5) sont formés par une déformation continue de deux fils (2) de la grille s'étendant avec écart l'un à côté de l'autre, l'écart étant légèrement plus grand que le diamètre des tuyaux de chauffage (6) à monter, et
**que** les fils (2) pour former les moyens à retenir des tuyaux (4, 5) élastiques sont déformés vers le haut et l'un vers l'autre de leur niveau définie dans la position d'utilisation de la grille.

2. Dispositif de fixation comme défini dans la revendication 1, **caractérisé en ce que** les moyens à retenir des tuyaux (4, 5) sont formés dans la grille, formée par les fils (2, 3), l'un à côté de l'autre et par des fils (2) s'étendant respectivement l'un à côté de l'autre et dans la même direction.
